# EUROPEAN PATENT APPLICATION

(11) **EP 1 358 804 A1**
(43) Date of publication of application: **05.11.2003**
(21) Application number: 02009954.5
(22) Date of filing: 03.05.2002
(51) Int. Cl.: A23G 1/12, A23G 1/04, A23G 1/10, A23G 1/00

(54) **Milk-containing chocolate**

(71) Applicant: SOCIETE DES PRODUITS NESTLE S.A., 1800 Vevey (CH)
(72) Inventor: Wang, Junkuan, 1027 Lonay (CH); Ducret, Pierre, 1113 St-Saphorin-Sur-Morges (CH); Bovetto, Llonel, 74500 Larringes (FR); Bize, Samuel, 1637 Charmey (CH); Munoz-Box, Rafael, 1814 La Tour-de-Pellz (CH); Rousset, Phillippe, 1066 Epallinges (CH)
(74) Representative: Pate, Frederick George

(57) **Abstract**

The present invention relates to a milk-containing chocolate eventually having a reduced fat lavel wherein most of the coarse particles are provided by milk particles, and to a process for its preparation wherein the milk particles are not refined or are separately refined and added at the conching stage.

## Description

### FIELD OF THE INVENTION

The present invention relates to a milk or white chocolate with an improved viscosity and the process for its preparation.

### BACKGROUND OF THE INVENTION

From a cocoa bean to a chocolate and especially a chocolate bar, many steps are implemented. First, the cocoa beans are cleaned, roasted and cooled before they are cracked and winnowed, in order to remove germs and shells. The remaining part is called nib, and it is this part which is ground to give the cocoa liquor. Cocoa liquor can be pressed to give cocoa powder; this operation extracts the cocoa butter. To make chocolate bars, the cocoa liquor is mixed with sugar, fat in the form of cocoa butter, and milk if a milk chocolate bar is wanted. This mix is then ground in order to obtain solid particles having a size small enough for acceptable grittiness; it is next agitated in a conche and more of the cocoa butter is added at this stage. This process allows obtaining dark chocolate, and milk chocolate if milk (usually in powder form) or fractions of milk, was added during the mixing stage.
White chocolate is manufactured by the same process, the major difference being that no cocoa liquor is used.

During the manufacture of chocolate bars, viscosity is a key point. If it is too high, the chocolate does not flow well during its processing. There are two common approaches used in chocolate industry to reduce the viscosity of chocolate: the first one is to have a large stirred tank shearing a small amount of chocolate; the second one is to highly shear a few kilos at a time in a continuous processor. Another used approach is to add emulsifier or add more fat.

WO 99/45789 to Mars relates to rheologically modified confectioneries, including chocolate, produced by employing particular particle size distributions. They recommend providing a bi-modal distribution by specifically selecting the mean particle size for each ingredient to obtain the desired particle size distribution. The mean particle size of each ingredient (fine to coarse) is selected based upon the desired global particle size distribution. The function of processing this way is to pack small particles in the interstices of larger particles.

It would however be desirable to process a milk or white chocolate having a controlled viscosity and a smaller amount of fat compared to usual milk or white chocolates.

### SUMMARY OF THE INVENTION

Accordingly, the present invention relates to a milk-containing chocolate eventually having a reduced fat lavel wherein most of the coarse particles are provided by milk particles, and to a process for its preparation wherein the milk particles are not refined or are separately refined and added at the conching stage.

In this invention, "chocolate" should be understood as chocolate or chocolate-like product (compound chocolate), "milk-containing chocolate" should be understood as white chocolate or milk chocolate, "milk ingredients" as milk particles and/or milk powder as well as other milk components such as whey or lactose powder, and "D₉₀" as a particle distribution whereby 90% in volume of the particles have a diameter below the D₉₀ limit. Particle size distribution was measured using a Mastersizer (Malvern Instruments, Ltd.).
The particle size given in the present invention is value of D₉₀, unless it is specified.

### DETAILED DESCRIPTION OF THE INVENTION

Fluidity of fatty suspensions, confectioneries, and particularly of chocolate, can be influenced by many factors. One of these well-known factors is the particle size: if the particles are too small, fluidity is decreased and manufacturing the chocolate is much more difficult, the chocolate mass being too thick.

In chocolate, large particles are important for mouthfeel with respect to grittiness, and small particles are important with respect to chocolate flow properties. Indeed, a large amount of fat is needed to cover the particles and to allow them to move in the chocolate mass; if the amount of fine particles is high, then there's an important need of fat to cover said particles to have a chocolate with an acceptable fluidity from a manufacturing point of view. Thus when the amount of fine particles is too high, fat is mostly used to cover said particles and is not free anymore to allow particles to move, rending the chocolate mass too thick to be handled properly.

Surprisingly, we have found that separating the millings of milk powder on one hand and at least sugar on the other hand provides a new means to obtain a milk-containing chocolate with excellent textural properties both with the ordinary fat level and with a reduced fat level. Furthermore, this separate milling of milk powder increases substantially the throughput of the refiner in the manufacturing of the chocolate mass.
Other chocolate ingredients such as cocoa liquor can be milled together either with sugar or with milk powder.

According to a first aspect of the invention, there is provided a process to manufacture a milk-containing chocolate with a separate milling of the milk powder. According to a second aspect of the invention, there is provided a milk-containing chocolate or a reduced-fat milk-containing chocolate wherein more than 30% of coarse particles are provided by milk.

In the usual milling process, cocoa liquor, crystalline sugar and milk components are added in a mixer with part of the cocoa butter. When it forms a uniform paste, it is fed into a two-roll refiner, breaking the bigger particles in smaller pieces and covering them with fat. Usually, at this stage, the maximum particle size is between 100 and 150 microns. The last grinding step takes place on a five-roll refiner, at the end of which 90% of the particles, in volume, have a diameter below 35 microns, generally (D₉₀ < 35 microns).
Then, the chocolate paste is conched. This process on one hand allows the flavour development of the chocolate paste and on the other hand turns the chocolate paste into a free flowing liquid that can be used to make the final chocolate product.

We have now found that refining separately the milk ingredients from the sugar resulted in a milk-containing chocolate with an improved fluidity and an excellent milk-containing chocolate from a textural and an organoleptic point of view, that the quantity of fat needed is reduced compared to a usual milk-containing chocolate, and that the throughput of refining can be increased.

The milk according to the invention is a milk powder which can be refined or can be used without previous refining, depending on the particle size and/or the process used to convert milk into milk powder. If the milk is spray dried to the size being in the range of the invention, for example, there is no necessity of an additional refining. If the milk powder particles processed by a spray dryer or another process have a diameter above 62 to 75 microns , they will be refined, for example on a roller refiner already known to refine particles of a chocolate mass, or on another machine, for example a air-jet mill. Any machine known to refine powder particles in smaller particle can of course be used at this stage.

The milk particles according to the invention should, with or without further refining, still be coarse particles having size of approximately 60 microns (50 to 75 microns) or preferably approximately 45 microns (35 to 55 microns).

According to the invention, the sugar, the cocoa liquor and the cocoa butter are mixed together in a usual mixer and milled in usual milling machines. When the chocolate mass is fed into the conche, the milk powder, unrefined or refined separately with the same machine or a different one, is added. Because there is no milk powder in the sugar mixture (namely the cocoa butter, cocoa liquor and sugar), the milling time needed to obtain the desired particle size (15 to 35 microns ) is reduced. On the other hand, since the milk powder is refined into coarse particles the throughput of the refiner is also significantly increased. As a result, the overall time reduction was observed to be above 10%, compared with a process wherein all the ingredients are mixed and milled together (usual process).

Furthermore, we have surprisingly found that the milk powder added to the mixed and milled other ingredients in the conche does not have to be ground at the same level as sugar particle. Coarse milk particles having a size of around 60 microns (50 to 75 microns) and preferably of around 45 microns (35 to 55 microns) do not give, in the final milk-containing chocolate, the gritty texture which would be expected by the skilled person, but the nice smooth texture demanded by the consumer. Besides, the separate refining of milk particles does not alter the milk-containing chocolate creamy taste.

According to the invention, the D₉₀ of the milk particles added to the conche is comprised between 35 to 60 - 75 microns, and preferably between 40 to 50 - 55 microns.

If the milk particles have been dried by the spray-drying technique to a size below 75 or below 60 microns, they do not have to be processed again and can be added directly into the conche. Indeed, milk particle dried by the spray drying technique are spherical particles with a closed surface, which is a preferred embodiment of the invention. This represents a saving of time and energy compared with the usual technique used to process milk-containing chocolates.

The quantity of milk used in the process of the invention is the same as the one used in usual milk-containing chocolates, either for the addition of whole milk or the addition of skimmed milk.

The process according to the invention allows a fat saving without alteration of the textural and organoleptic properties. A usual milk chocolate contains approximately 20 to 25 % of cocoa butter and a white chocolate contains from 25 to 30 % of cocoa butter (percentages based on the weight of chocolate); the milk-containing chocolates also contain fat from milk, 3.5 to 7% for the milk chocolates and 5.0 to 8.5% for the white chocolates. By using the process according to the invention, a milk chocolate with the same textural and organoleptic characteristics can contain from 15 to 23 % of cocoa butter, preferably 17 to 20%, and more preferably 18%. A white chocolate processed by the process of the invention can contain from 20 to 27 % of cocoa butter, preferably 22 to 25%, and more preferably 23% (cf. table below).

| Composition of chocolate (%) | | | | |
|---|---|---|---|---|
| | Milk chocolate | | White chocolate | |
| | Usual Usual | Of the invention | Usual Usual | Of the invention |
| Chocolate liquor | 10 - 15 | 10 - 15 | - | - |
| Milk solids (1) | 12 - 25 | 12 - 25 | 25 - 30 | 25 - 30 |
| Sugar | 40 - 55 | 40 - 55 | 40 - 55 | 40 - 55 |
| Lactose (2) | 5 - 11 | 5 - 11 | 8 - 12 | 8 - 12 |
| Cocoa butter | 20 - 25 | 15-25 | 25 - 30 | 20-30 |
| Milk fat (2) | 3.5 - 7.0 | 3.5 - 7.0 | 5.0 - 8.5 | 5.0 - 8.5 |
| water | 0.5 - 1.0 | 0.5 - 1.0 | 0.5 - 1.0 | 0.5 - 1.0 |

| | | | | |
|---|---|---|---|---|
| (1) including milk fat | | | | |
| (2) included in milk solids | | | | |

According to one aspect of the invention, the milk-containing chocolate is a reduced-fat milk-containing chocolate, and contains from 15 to 27 % of fat, preferably 18 to 22 %. The amount of fat in the milk-containing chocolate, according to the invention, can be reduced by 2 to 5%. However, the milk-containing chocolate does not have to be low fat and it can have the usual percentage of fat (see table above).

The separate refining according to the invention can increase the fluidity of the milk-containing chocolate 15% or more compared to a milk-containing chocolate processed by the usual way.

According to the invention, as known in the milk-containing chocolate industry other components can be added to the chocolate mass, such as, for example, lecithin, flavours, functional ingredients, aromas and other additives in proportions known by the skilled person. Within the context of this specification, the term "functional ingredient" refers more particularly to the ILSI European definition that states that a functional food can be regarded as "functional" if it is satisfactory demonstrated to affect beneficially one or more targets in the body, beyond adequate nutritional effects in a way that is either an improved state of health and well being and/or reduction of risk of disease. In particular, functional ingredients are nutritive substances that can be added to foods in controlled quantities in order to fulfill a specific physiological function to promote the health and well-being of the consumer. The functional ingredients may include ingredients having active effects in dental or medical hygiene, bone health, digestive aid, intestinal protection, stress relief, throat sooters, breath freshners, etc.

According to the second aspect of the invention, there is provided a milk-containing chocolate or a reduced fat milk-containing chocolate wherein most of the coarse particles are provided by milk particles, and not sugar particles or a combination of sugar particles and milk particles. Thus, at least 30% of the coarse particles are provided by milk powder, in a preffered embodiment at least 40% and in the best mode of realisation at least 55%.

The milk-containing chocolate according to the invention can comprise, for example, lecithin, flavours, functionnal ingredients, aromas and other additives in proportions known by the skilled person. It can also be seen as a carrier to functionnal ingredients, especially to touch some categories of the population which are not easily approachable such as children, elderly people or even pregnant women.

In the present invention, sugar (also named sucrose or saccharose) can be replaced partially or totally by any known sugar substitute, for example fructose, glucose, glucose syrups, inverted sugar, isomalt, lactose, lactulose, maltitol, mannitol, sorbitol or xylitol, or a mixture thereof. It can also be replaced, totally or partially, by substitutes with a high sweetening power, such as acetosulfame K, aspartame, cyclamate, dihydrochalcone, glycyrrhizine, monelline, osladine, phylloducine, saccharine, stevioside, sucrol, thaumatine or trichlorogalactosaccharose, or a mixture thereof.

Cocoa butter can be replaced, partially or totally, by non-cocoa vegetable fats, but preferably in an amount of less than 5% of the total weight of the product especially in countries where the legislation allows the product to be sold as chocolate if it contains less than 5% of non-cocoa fat. The non-cocoa vegetable fats can be either cocoa butter equivalents or cocoa butter replacers, known by the skilled person. For example, it can be part of the oil obtained from *Eleaeis guineensis* (palm), of *Shorea stenoptra* (illipe), *Butyrosperum parkii* (shea) and *Shorea robusta* (sal), or a mixture thereof ( "The science of chocolate", Stephen T Beckett, RCS paperbacks, 2000 edition, page 98).

According to the invention, the milk-containing chocolate can be used in any field of the chocolate industry. For example, it can be used to make chocolate bars, chocolate toppings, chocolate coatings, chocolate crumbs or chocolate fillings and can be used to make chocolate ice-creams, chocolate cereals, chocolate powders (such as breakfast chocolate powder), chocolate cakes and biscuits, as well as any known use of chocolate in the food industry or another industry.

### EXAMPLES

The following examples are illustrative of some of the products and methods of making the same falling within the scope of the present invention. They are not to be considered in any way limitative of the invention. Changes and modifications can be made with respect to the invention. That is, the skilled person will recognise many variations in these examples to cover a wide range of formulas, ingredients, processing, and mixtures to rationally adjust the naturally occurring levels of the compounds of the invention for a variety of applications.

### EXAMPLE 1

A milk-containing chocolate having 28% of fat and a particle size of 28 microns (D₉₀) was prepared using the following recipe (percentages given by weight):

| | |
|---|---|
| Cocoa liquor | 10.2% |
| Skim milk powder | 15.0% |
| Lactose powder | 4.2% |
| Sugar | 48.2% |
| Cocoa butter and milk fat | 22.1% |
| Lecithin | 0.3% |

Cocoa liquor, sugar, lactose powder and part of cocoa butter were mixed together for approximately 5 min, until they turned into a uniform paste having the appropriate consistency. The paste was then refined on a three-roll refiner to give a refined mass (A) having a particle size of 25 microns. Skim milk powder, milk fat and cocoa butter mixture was refined separately to give a refined mass (B) having a particle size of 40 microns. The above refined masses were loaded into the conche, together with the remaining fat and 0.2% of lecithin, wherein the mixture comprising 79% by weight of non-fat solid particles from A and 21% by weight of non-fat solid particles from B. The resulting mass was conched at 60° C for 16 hours and then 0.2% of lecithin was added and the material was conched further for one hour. The milk chocolate produced had a casson plastic viscosity of 2.8 Pa.s, a yield value of 10.4 Pa. Rheology values were determined by using a Thermo Haake VT 550 and applying the IOCCC 2000 method (International Office of Cocoa, Chocolate and Confectionery). The chocolate had a smooth texture and no significant differences in flavour compared to the reference.

### EXAMPLE 2 (control-comparative example)

The control milk-containing chocolate having 28% of fat and a particle size of 28 microns (D₉₀) was prepared using the following recipe (percentages given by weight):

| | |
|---|---|
| Cocoa liquor | 10.2% |
| Skim milk powder | 15.0% |
| Lactose powder | 4.2% |
| Sugar | 48.2% |
| Cocoa butter and milk fat | 22.1% |
| Lecithin | 0.3% |

Cocoa liquor, sugar, lactose powder, skim milk powder, milk fat and part of cocoa butter were mixed together for approximately 5 min, until they turned into a uniform paste having the appropriate consistency. The paste was then refined on a three-roll refiner to give a refined mass having a particle size of 28 microns. The refined mass was loaded into the conche, together with the remaining fat and 0.2% of lecithin. The resulting mass was conched at 60° C for 16 hours and then 0.2% of lecithin was added and the material was conched further for one hour. The milk chocolate produced had a casson plastic viscosity of 3.5 Pa.s, a yield value of 17.4 Pa. Rheology values were determined by using a Thermo Haake VT 550 and applying the IOCCC 2000 method.

### EXAMPLE 3

A white chocolate having 29% of fat and a particle size of 42 microns (D₉₀) was prepared using the following recipe (percentages given by weight):

| | |
|---|---|
| Skim milk powder | 22.2% |
| Sugar | 48.2% |
| Cocoa butter and milk fat | 29.2% |
| Lecithin | 0.3% |
| Vanilline | 0.02% |

Sugar, and cocoa butter were mixed together for approximately 5 min, until they turned into a uniform paste having the appropriate consistency. The paste was prerefined on a two-roll refiner and then reduced to the final particle size on a five-roll refiner. The refined mass (A) had a particle size of 30 microns. Skim milk powder and milk fat were refined separately on a five-roll refiner to give a refined mass (B) having a particle size of 52 microns. The overall throughput of refining was increased 30%. The above refined masses were loaded into the conche, together with the remaining fat, wherein the mixture comprising 60% by weight of non-fat solid particles from A and 40% by weight of non-fat solid particles from B. The resulting mass was conched at 60° C for 5 hours and then 0.3% of lecithin was added and the material was conched further for 0.5 hour. The rheology of the resulting chocolate was then determined. The white chocolate produced had a smooth texture and the following viscosity data: casson plastic viscosity of 2.2 Pa.s, a yield value of 6.2 Pa. Rheology values were determined by using a Thermo Haake VT 550 and applying the IOCCC 2000 method.
The white chocolate obtained was a reduced fat chocolate compared to usual white chocolates, as it contained 29% fat instead of 32%.

## Claims

1. Process for the preparation of a milk-containing chocolate comprising the steps of milling all the ingredients except milk ingredients and conching them all together.

2. Process according to claim 1 wherein the milk powder is separately refined or not refined before being added in the conche.

3. Process according to claim 1 or 2 wherein the milk-containing chocolate is a reduced fat chocolate.

4. Process according to one of claims 1 to 3 wherein the milk ingredients are milled coarser than the other ingredients.

5. Process according to one of claims 1 to 4 wherein the milk ingredients are not milled.

6. Process according to one of claims 1 to 5 wherein the milk ingredients have a particle size of 50 to 75 microns, and preferably 35 to 50 microns.

7. Process according to one of claims 1 to 6 wherein D₉₀ of sugar particles is below 35 microns.

8. Process according to one of claims 1 to 7 wherein cocoa butter of the milk-containing chocolate is partially or totally replaced by vegetable fats.

9. Process according to one of claims 1 to 7 further comprising the addition of functional ingredients to the milk-containing chocolate.

10. Milk-containing chocolate obtainable by any of the preceding claims.

11. Use of the milk-containing chocolate obtainable by the process described in claims 1 to 9 to make chocolate bars, chocolate toppings, chocolate coatings, chocolate crumbs and/or chocolate fillings.

12. Milk-containing chocolate wherein, at least 30% of the coarse particles are provided by milk powder, in a preferred embodiment at least 40% and in the best mode of realisation at least 50%.

13. Milk-containing chocolate according to claim 12 wherein the milk ingredients have a particle size of 50 to 75 microns, and preferably 35 to 50 microns.

14. Milk-containing chocolate according to claim 12 or claim 13 wherein the chocolate is a reduced fat chocolate

15. Milk-containing chocolate according to one of claims 12 to 14 wherein cocoa butter is partially or totally replaced by vegetable fats.

16. Milk-containing chocolate according to one of claims 12 to 15 further comprising functional ingredients.
